# EUROPÄISCHE PATENTSCHRIFT

(11) **EP 3 594 392 B1**
(45) Veröffentlichungstag und Bekanntmachung des Hinweises auf die Patenterteilung: **19.05.2021**
(21) Anmeldenummer: 19163195.1
(22) Anmeldetag: 15.03.2019
(51) Int. Cl.: D04B 23/00, D04B 27/00

(54) **KETTENWIRKMASCHINE MIT EINEM SCHWINGUNGSDÄMPFER**
WARP KNITTING MACHINE WITH A VIBRATION DAMPING DEVICE
MÉTIER À TRICOTER EN CHAÎNE DOTÉ D'UN AMORTISSEUR DE VIBRATIONS

(43) Veröffentlichungstag der Anmeldung: 15.01.2020
(73) Patentinhaber: KARL MAYER STOLL R&D GmbH, 63179 Obertshausen (DE)
(72) Erfinder: Dziedzioch, Damian, 63179 Obertshausen (DE); Kollek, Klaus, 65239 Hochheim (DE)

(56) Entgegenhaltungen:
- EP-A1- 2 130 961
- EP-A1- 3 081 681
- EP-A1- 3 088 578
- DE-A1- 19 803 912

## Beschreibung

Die Erfindung betrifft eine Kettenwirkmaschine mit einer Barrenanordnung umfassend mehrere Barren, die Wirkwerkzeuge aufweisen, mit einer tragenden Struktur, die mindestens einen Tragkörper aufweist, der im Wesentlichen parallel zu den Barren ausgerichtet ist, und mit einem Schwingungsdämpfer, wobei es sich bei dem Schwingungsdämpfer um einen passiven Schwingungsdämpfer handelt, der mit einer Wandung des Tragkörpers in einer Wirkverbindung steht, wobei der Schwingungsdämpfer an der Wandung des Tragkörpers innerhalb eines mittleren Drittels des Tragkörpers entlang einer Längsrichtung des Tragkörpers befestigt ist.

Bei der Herstellung einer Wirkware arbeiten verschiedene, an den Barren angeordnete Wirkwerkzeuge zusammen, um Maschen zu bilden. Eine tragende Struktur der Wirkmaschine trägt die Barren. Die tragende Struktur weist einen Tragkörper auf, der parallel zu den Barren angeordnet ist. Bei dem Tragkörper kann es sich um ein Maschinenbett handeln, in dem eine Antriebseinrichtung zur Bewegung der Barren angeordnet ist. Bei einem Maschenbildungszyklus werden die Barren mindestens einmal beschleunigt und einmal abgebremst.

Dabei wird die gesamte tragende Struktur zu Schwingungen angeregt. Schwingungen können nicht nur durch die Beschleunigung und Abbremsung der Barren entstehen, sondern auch durch die Wechselwirkung der Antriebseinrichtung mit der tragenden Struktur. Im Maschinenbett greift mindestens eine Antriebswelle an eine Vielzahl von Stößeln an, die Kräfte von der Antriebswelle auf die Barren übertragen. Somit liegen vielerlei Schwingungsquellen vor. Dadurch kann sich die Position von Wirknadeln und Legenadeln relativ zueinander beim Betrieb der Wirkmaschine insbesondere bei hohen Drehzahlen so stark verändern, dass die Wirknadeln die Legenadeln streifen, wenn sie zwischen diesen hindurchschwingen. Solche Kollisionen der Wirkwerkzeuge sind zu vermeiden.

Aus der EP 3 081 681 B1 ist die Verwendung von passiven Schwingungsdämpfern in einer Barre bekannt. Bei einem passiven Schwingungsdämpfer handelt es sich um einen Schwingungsdämpfer, der zu seinem Betrieb keine externe Energiezufuhr benötigt. Die in der Barre angeordneten passiven Schwingungsdämpfer dämpfen Schwingungen in Längsrichtung der Barre. Komplexe, sich überlagernde Schwingungen können damit aber nicht gedämpft werden. Insbesondere bei sehr hohen Arbeitsgeschwindigkeiten kann diese Lösung Wirkwerkzeug-Kollisionen nicht verhindern.

Die EP 3 088 578 B1 schlägt den Einsatz eines aktiven Schwingungsdämpfers vor, der im Bereich einer Stirnseite eines Maschinenbetts der Kettenwirkmaschine angeordnet ist. Der aktive Schwingungsdämpfer benötigt einen Antrieb. Dieser Aufbau ist deshalb vergleichsweise aufwändig.

Die EP 2130961 A1 beschreibt eine Kettenwirkmaschine mit unterseitig angebrachten Dämpfungselementen, die periodisch den Untergrund berühren, wenn sich die Kettenwirkmaschine im Betrieb hebt und senkt. Die DE 19803912 A1 beschreibt eine Kettenwirkmaschine mit einem passiven Schwingungsdämpfer, der seitlich an einer Traverse befestigt ist.

Der Erfindung liegt die Aufgabe zu Grunde, eine Kettenwirkmaschine mit einem passiven Schwingungsdämpfer bereitzustellen, der eine verbesserte Wirkung aufweist.

Die Aufgabe wird gelöst, indem eine Kettenwirkmaschine bereitgestellt wird, bei der der Schwingungsdämpfer ausschließlich mit dem mittleren Drittel der Wandung in einer Wirkverbindung steht. Dies bedeutet, dass der Schwingungsdämpfer ausschließlich an dem mittleren Drittel der Wandung befestigt ist. So kann es erfindungsgemäß vorgesehen sein, dass ein Befestigungselement des Schwingungsdämpfers ausschließlich an das mittlere Drittel der Wandung angreift. Es hat sich herausgestellt, dass die erzielte Dämpfungswirkung genau dann besonders groß ist. Bevorzugt befindet sich der Schwingungsdämpfer ausschließlich in einem Bereich, der entlang des mittleren Drittels der Wandung seitlich von dem Tragkörper angeordnet ist.

Der passive Schwingungsdämpfer kann aufgrund seiner Positionierung beim Betrieb auftretende Schwingungen ausreichend dämpfen. Die Längsrichtung des Tragkörpers verläuft parallel zu einer langen Kante des Tragkörpers.

Es hat sich bei Messungen herausgestellt, dass das mittlere Drittel des Tragkörpers zur Befestigung des passiven Schwingungsdämpfers besonders gut geeignet ist. Überraschenderweise ist bei dieser Anordnung ein passiver Schwingungsdämpfer für eine ausreichende Dämpfung hinreichend; ein aktiver Schwingungsdämpfer wird nicht benötigt. Es entsteht beim Betrieb der Maschine ein Schwingungsbauch, der sich am Tragkörper ungefähr mittig entlang der Längsrichtung befindet. Deshalb ist es bevorzugt, wenn der Schwingungsdämpfer an dem Tragkörper mittig angeordnet ist.

Es ist besonders bevorzugt, wenn der Schwingungsdämpfer an einem Abschnitt der Wandung des Tragkörpers angeordnet ist, der beim Betrieb der Kettenwirkmaschine einen Schwingungsbauch bildet. Bei dem Schwingungsbauch handelt es sich um einen Abschnitt der Wandung, an dem eine maximale Schwingungsamplitude auftritt. Ist der Schwingungsdämpfer genau hier angeordnet, dann ergibt sich eine besonders gute Schwingungsdämpfung.

Vorzugsweise ist an dem Tragkörper mindestens ein passiver Zusatzschwingungsdämpfer befestigt. Bei dem Zusatzschwingungsdämpfer handelt es sich um ein zusätzliches passives Dämpfungselement. Der Zusatzschwingungsdämpfer kann erfindungsgemäß die gleiche oder eine andere Bauart aufweisen als der Schwingungsdämpfer. Der passive Zusatzschwingungsdämpfer ist bevorzugt an derselben Wandung befestigt, an der auch der Schwingungsdämpfer befestigt ist. Der passive Zusatzschwingungsdämpfer kann jedoch auch an einer anderen Wandung, das heißt an einer anderen Seitenfläche des Tragkörpers, befestigt sein.

Es ist vorteilhaft, wenn der Zusatzschwingungsdämpfer an der Wandung des Tragkörpers außerhalb eines mittleren Drittels des Tragkörpers entlang der Längsrichtung des Tragkörpers befestigt ist. Am Schwingungsbauch des Tragkörpers liegt eine Hauptschwingung maximaler Amplitude vor. Diese lässt sich mit Hilfe der vorhergehend beschriebenen Anordnung ergänzend dämpfend. Es ist besonders vorteilhaft, wenn der Zusatzschwingungsdämpfer an einem Abschnitt der Wandung angeordnet ist, der durch einen Abstand zwischen einem Schwingungsknoten und einer Stirnseite des Tragkörpers definiert wird. Bei einem Schwingungsknoten handelt es sich um einen Abschnitt einer stehenden Welle, der keiner Auslenkung unterliegt. Bei der vorliegenden Erfindung kann die Hauptschwingung in dem Tragkörper eine stehende Welle bilden. Werden die Zusatzschwingungsdämpfer wie beschrieben angeordnet, dann führt dies zu einer bedeutsamen zusätzlichen Dämpfung der Hauptschwingung. Auch höherfrequente Schwingungen lassen sich mittels der beschriebenen Anordnung abschwächen.

Es ist bevorzugt, wenn die Kettenwirkmaschine zwei Zusatzschwingungsdämpfer aufweist, die symmetrisch von dem Schwingungsdämpfer beabstandet sind. Hierdurch ergibt sich eine zusätzliche Dämpfungswirkung. Der Schwingungsdämpfer kann somit kleiner dimensioniert werden, wodurch sich eine kompaktere Bauweise ergibt. Wirkwerkzeug-Kollisionen werden sowohl mittig als auch in Randbereichen der Barrenanordnung verhindert.

Es kann erfindungsgemäß vorgesehen sein, dass es sich bei dem Tragkörper um ein Maschinenbett handelt, in dem ein Getriebe zum Antrieb der Barren angeordnet ist. Durch das Maschinenbett hindurch verläuft in der Regel mindestens eine Antriebswelle, die über ein Getriebe an Stößel angreift. Die Stößel sind aus dem Maschinenbett herausgeführt und treiben die Barren an, mit denen sie direkt oder indirekt gekoppelt sind. Unerwünschte Schwingungen in der Barrenanordnung lassen sich aufgrund der engen Kopplung zwischen Barren und Maschinenbett besonders gut beseitigen, indem der passive Schwingungsdämpfer an dem Maschinenbett angebracht wird.

Gemäß einer besonderen Ausführungsform der Erfindung handelt es sich bei der Wandung um eine Bodenwand des Maschinenbetts. Wie sich herausgestellt hat, entsteht ein besonders großer Schwingungsbauch an der Bodenwand sowie an einer Deckenwand des Maschinenbetts. Im Gegensatz zur der Deckenwand, die Öffnungen für die Stößel aufweist, welche mit den Barren gekoppelt sind, bildet die Bodenwand eine geschlossene Oberfläche. Deshalb stellt sich ein besonders guter Dämpfungseffekt ein, wenn der passive Schwingungsdämpfer mit der Bodenfläche in Wirkverbindung steht.

Vorzugsweise ist der Schwingungsdämpfer an einer Außenseite der Bodenwand befestigt, wobei das Maschinenbett durch Fußelemente gestützt ist, sodass die Bodenwand von einem Untergrund, auf dem das Maschinenbett steht, beabstandet ist. Der Schwingungsdämpfer kann somit unterhalb des Maschinenbetts befestigt werden. Es wird kein zusätzlicher Raum innerhalb des Maschinenbetts beansprucht. Es sind jedoch erfindungsgemäß auch Ausführungsformen der Erfindung möglich, bei denen der Schwingungsdämpfer innerhalb des Maschinenbetts angeordnet ist.

Gemäß einer bevorzugten Ausführungsform der Erfindung handelt es sich bei dem Tragkörper um eine Traverse, die oberhalb der Barrenanordnung verläuft. Bei der Traverse handelt es sich um einen Teil der tragenden Struktur der Kettenwirkmaschine, an dem Barren, Fadenführer und sonstige Bauteile der Kettenwirkmaschine aufgehängt sein können. Somit kann eine Anbringung des passiven Schwingungsdämpfers insbesondere an diesen Bauteilen unerwünschte Schwingungen effektiv abschwächen.

Erfindungsgemäß handelt es sich bei der Wandung vorzugsweise um eine Bodenwand oder um eine Deckenwand der Traverse. An einer Deckenwand und an einer Bodenwand der Traverse treten in der Regel Schwingungen auf, die sich mittels eines passiven Schwingungsdämpfers besonders gut abschwächen lassen. An weiteren Seitenwänden ist die Anbringung eines passiven Schwingungsdämpfers jedoch ebenfalls möglich. Vorzugsweise ist der passive Dämpfer dabei an einer Innenwand der Traverse befestigt. Der passive Schwingungsdämpfer kann jedoch auch an einer Außenseite der Traverse angebracht sein. Es ist erfindungsgemäß möglich, dass sowohl an der Traverse als auch an dem Maschinenbett jeweils ein passiver Schwingungsdämpfer befestigt ist.

Der Schwingungsdämpfer kann erfindungsgemäß so ausgestaltet sein, dass er ein Befestigungselement, einen Schwingarm und eine Schwingmasse aufweist, wobei das Befestigungselement an der Wandung des Tragkörpers befestigt ist, wobei sich der Schwingarm ausgehend von dem Befestigungselement im Wesentlichen parallel zu der Wandung erstreckt und von dieser beabstandet ist, und wobei die Schwingmasse von dem Befestigungselement beabstandet an dem Schwingarm angeordnet ist. Dies ermöglicht eine kompakte Bauform des Schwingungsdämpfers. Der Schwingungsdämpfer bildet ein FederMasse-System. Er ist vorzugsweise so ausgelegt, dass er im Wesentlichen Schwingungen dämpft, deren Ausbreitungsrichtung in einer Normalenrichtung zu der Wandung des Tragkörpers liegt.

Der Schwingarm ist bevorzugt im Wesentlichen parallel zu der Längsrichtung des Tragkörpers ausgerichtet. Es hat sich herausgestellt, dass bei dieser Anordnung Schwingungen besonders effektiv gedämpft werden. Der Schwingarm kann gemäß einer Variante der Erfindung als eine Platte, also ein im Wesentlichen flächiges Element, ausgestaltet sein. Die Platte ist in einer Querrichtung zu der Längsrichtung des Tragkörpers vergleichsweise steif, sodass Schwingungen in einer Querrichtung zu der Längsrichtung des Tragkörpers keine Dämpfung erfahren. Gemäß einer anderen Variante der Erfindung ist der Schwingarm als ein Biegebalken ausgestaltet. Dieser weist eine in der Querrichtung verhältnismäßig geringe Dicke auf, sodass er auch in dieser Richtung elastisch verformbar ist. Ein Schwingungsdämpfer dieser Art kann auch Schwingungen in Querrichtung dämpfen.

Es ist vorteilhaft, wenn die Schwingmasse an einer Schwingarmoberfläche des Schwingarms befestigt ist, die der Wandung zugewandt ist, wobei die Schwingmasse zumindest teilweise zwischen der Schwingarmoberfläche und der Wandung des Tragkörpers angeordnet ist. Hierdurch wird die Bauhöhe des Schwingungsdämpfers reduziert; der Platzverbrauch sinkt. Dies ist besonders bei der zuvor beschriebenen Ausführungsform der Erfindung von Vorteil, bei der der Schwingungsdämpfer an der Außenseite der Bodenwand des Maschinenbetts befestigt wird. Es ist besonders vorteilhaft, wenn die Schwingmasse ausschließlich zwischen der Schwingarmoberfläche und der Wandung des Tragkörpers angeordnet ist.

Vorzugsweise erstreckt sich der Schwingarm ausgehend von dem Befestigungselement in zwei entgegengesetzte Richtungen, sodass er einen ersten Schwingabschnitt und einen zweiten Schwingabschnitt bildet, wobei an dem ersten Schwingabschnitt und an dem zweiten Schwingabschnitt jeweils eine Schwingmasse angeordnet ist, und wobei die Schwingmassen von dem Befestigungselement beabstandet sind. Da nun zwei Schwingmassen zum Einsatz kommen, können diese kleiner dimensioniert werden, als wenn nur eine Schwingmasse vorgesehen ist. Dies reduziert die Bauhöhe des Schwingungsdämpfers.

Gemäß einer vorteilhaften Ausführungsform der Erfindung sind die Schwingmassen und/oder die Schwingarme so ausgelegt, dass der Schwingungsdämpfer mehrere unterschiedliche Eigenfrequenzen zur Dämpfung von Schwingungen aufweist. Dadurch kann es gelingen, mit lediglich einem Schwingungsdämpfer mehrere Resonanzfrequenzen der Kettenwirkmaschine zu dämpfen. Erfindungsgemäß kann der Schwingungsdämpfer so ausgelegt werden, dass er zwei unterschiedliche Eigenfrequenzen aufweist. Zu diesem Zweck können die Schwingmassen so ausgeführt sein, dass sich ihr Gewicht und/oder ihre Form unterscheidet. Ferner können zu diesem Zweck die Schwingabschnitte unterschiedlich lang sein.

Bevorzugt wird die Schwingmasse durch mindestens zwei aneinander anliegende Metallplatten gebildet. Wenn die Schwingmasse beim Betrieb der Kettenwirkmaschine an dem Schwingarm auf und ab bewegt wird, dann verformt sie sich geringfügig. Durch Reibung der Metallplatten aneinander stellt sich ein sogenannter Fugendämpfungseffekt ein. Umso mehr Metallplatten aneinander anliegen, umso größer ist dieser Effekt in der Schwingmasse. Die Metallplatten sind vorzugsweise miteinander verschraubt.

Besonders bevorzugt sind die Metallplatten parallel zu der Wandung des Tragkörpers ausgerichtet. Erfindungsgemäß sollten die Metallplatten durch ein Metall hoher Dichte gebildet werden, um eine besonders starke Dämpfungswirkung zu erzielen. So kann es gemäß einer Ausführungsform der Erfindung vorgesehen sein, dass die Metallplatten aus Stahl bestehen. Alternativ können die Metallplatten aus Gusseisen bestehen. Dieses weist eine geringer Dichte als Stahl auf, bietet dafür aber eine höhere innere Materialdämpfung. Der Einsatz von Grauguss ist bevorzugt.

Die vorangehenden Ausführungen zum Aufbau des Schwingungsdämpfers gelten in gleichem Maße auch für den Aufbau des Zusatzschwingungsdämpfers. Es ist erfindungsgemäß jedoch auch möglich, dass der Zusatzschwingungsdämpfer einen Aufbau aufweist, der sich von dem Aufbau des Schwingungsdämpfers unterscheidet.

Mögliche Ausführungsformen der Erfindungen werden in den Zeichnungen näher beschrieben. Dabei zeigt:
Fig. 1 eine schematische Darstellung einer tragenden Struktur einer Kettenwirkmaschine mit einem passiven Schwingungsdämpfer in einer perspektivischen Ansicht,
Fig. 2 eine schematische Darstellung einer tragenden Struktur einer Kettenwirkmaschine mit einem passiven Schwingungsdämpfer und zwei Zusatzschwingungsdämpfern in einer perspektivischen Ansicht,
Fig. 3 eine schematische Darstellung einer ersten Ausführungsform des passiven Schwingungsdämpfers in einer perspektivischen Ansicht,
Fig. 4 eine schematische Darstellung einer zweiten Ausführungsform des passiven Schwingungsdämpfers in einer perspektivischen Ansicht,
Fig. 5 eine schematische Darstellung einer dritten Ausführungsform des passiven Schwingungsdämpfers in einer perspektivischen Ansicht,
Fig. 6 eine schematische Darstellung einer vierten Ausführungsform des passiven Schwingungsdämpfers in einer perspektivischen Ansicht,
Fig. 7 eine schematische Darstellung einer Schwingmasse, die mehrere Metallplatten aufweist, in einer Seitenansicht,
Fig. 8 eine schematische Darstellung einer tragenden Struktur einer Kettenwirkmaschine mit einer Traverse in einer perspektivischen Ansicht und
Fig. 9 eine schematische Darstellung der tragenden Struktur der Kettenwirkmaschine gemäß Fig. 8 unter Einwirkung von Verformungskräften beim Betrieb der Kettenwirkmaschine.

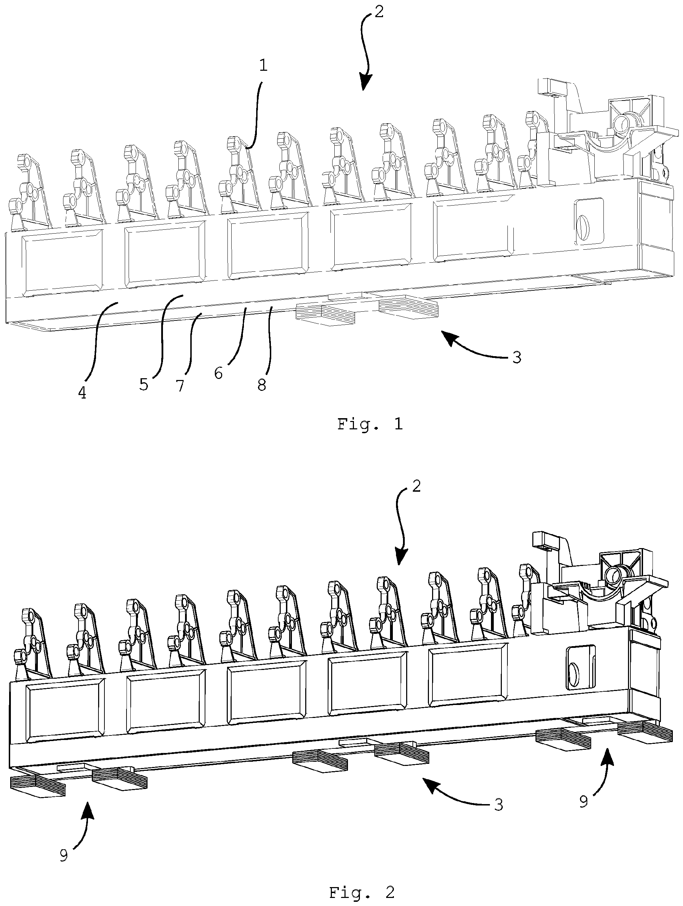

Fig. 1 zeigt eine schematische Darstellung einer tragenden Struktur 1 einer Kettenwirkmaschine 2 mit einem passiven Schwingungsdämpfer 3 in einer perspektivischen Ansicht. Die tragende Struktur 1 der Kettenwirkmaschine 2 weist einen Tragkörper 4 auf, bei dem es sich um ein Maschinenbett 5 handelt. Das Maschinenbett 5 enthält einen Antriebsmechanismus für vorliegend nicht dargestellte Barren der Kettenwirkmaschine 2. Das Maschinenbett 5 ist daher im Betrieb besonders großen Kräften ausgesetzt, die zu einer elastischen Deformation des Maschinenbetts 5 führen. Um dem entgegenzuwirken, ist an einer Wandung 6 des Maschinenbetts 5 der Schwingungsdämpfer 3 angebracht. Bei der Wandung 6 handelt es sich um eine Bodenwand 7 des Maschinenbetts 5. Der Schwingungsdämpfer 3 ist in Längsrichtung des Maschinenbetts 5 mittig an einer Außenseite 8 der Bodenwand 7 befestigt.

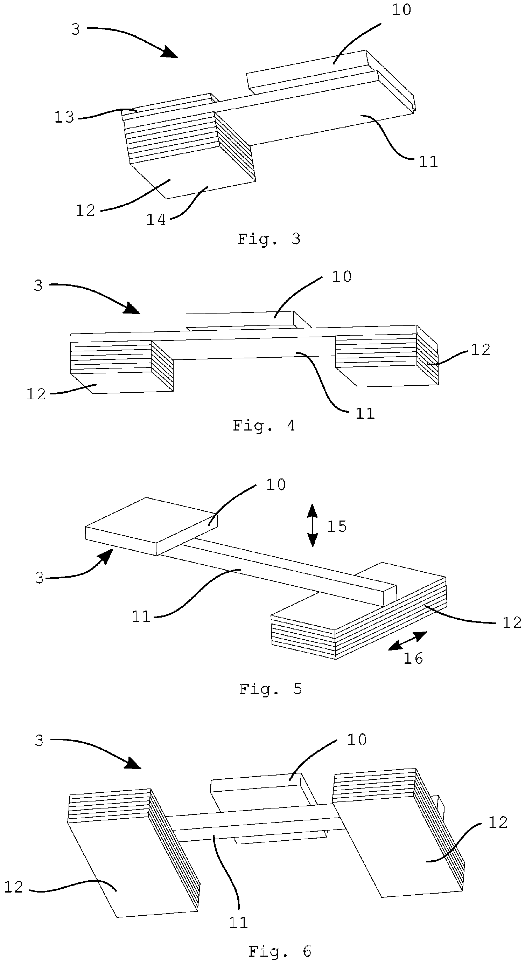

Fig. 2 zeigt eine schematische Darstellung einer tragenden Struktur einer Kettenwirkmaschine 2 mit einem passiven Schwingungsdämpfer 3 und mit zwei Zusatzschwingungsdämpfern 9 in einer perspektivischen Ansicht. Die beiden Zusatzschwingungsdämpfer 9 sind mit dem Schwingungsdämpfer 3 baugleich und von diesem symmetrisch beabstandet. Hierdurch wird eine gegenüber der Ausführungsform aus Fig. 1 verbesserte Dämpfung erzielt. Fig. 3 zeigt eine schematische Darstellung einer ersten Ausführungsform des passiven Schwingungsdämpfers 3 in einer perspektivischen Ansicht. Der Schwingungsdämpfer weist ein Befestigungselement 10 auf. Das Befestigungselement 10 ist zur Befestigung des passiven Schwingungsdämpfers 3 an einer Wandung eines Tragkörpers einer Kettenwirkmaschine vorgesehen. Ein Schwingarm 11 ist mit dem Befestigungselement 10 verbunden. Der Schwingarm 11 ist plattenförmig ausgeführt. An einem Ende des Schwingarms 11 ist eine Schwingmasse 12 angebracht. Beim Betrieb der Kettenwirkmaschine werden durch den Schwingungsdämpfer 3 von einem nicht gezeigten Tragkörper emittierte Schwingungswellen aufgenommen, wobei sich der Schwingarm 11 elastisch verformt und in Zusammenwirkung mit der Schwingmasse 12 den Schwingungswellen entgegengewirkt wird, wodurch eine unerwünschte Vibration der Kettenwirkmaschine 2 abgeschwächt wird. Die Schwingmasse 12 unterteilt sich in einen oberen Schwingmassenanteil 13, der auf einer Seite des Schwingarms 11 angeordnet ist, die dem Tragkörper zugewandt ist, und in einen unteren Schwingmassenanteil 14, der auf einer Seite des Schwingarms 11 angeordnet ist, die dem Tragkörper abgewandt ist.

Fig. 4 zeigt eine schematische Darstellung einer zweiten Ausführungsform des passiven Schwingungsdämpfers 3 in einer perspektivischen Ansicht. Der Schwingungsdämpfer 3 weist ein Befestigungselement 10 und einen Schwingarm 11 auf. Der Schwingarm 11 ist plattenförmig ausgeführt. Der Schwingarm 11 erstreckt sich ausgehend von dem Befestigungselement 10 in zwei entgegengesetzte Richtungen. An zwei entgegengesetzten Enden des Schwingarms 11 ist jeweils eine Schwingmasse 12 angebracht. Diese Ausführungsform des Schwingungsdämpfers 3 bietet den Vorteil, dass bei unterschiedlicher Dimensionierung der beiden Schwingmassen 12 der Schwingungsdämpfer 3 zwei unterschiedliche Eigenfrequenzen aufweist. Hierdurch kann die zielgenaue Dämpfung von zwei störenden Schwingungen unterschiedlicher Frequenz erreicht werden.

Fig. 5 zeigt eine schematische Darstellung einer dritten Ausführungsform des passiven Schwingungsdämpfers 3 in einer perspektivischen Ansicht. Der Schwingarm 11 ist nicht plattenförmig, sondern balkenförmig ausgebildet. Mit diesem Schwingungsdämpfer gelingt somit nicht nur eine Dämpfung von Schwingungen in einer Normalenrichtung 15 zu einer Wandung eines nicht gezeigten Tragkörpers, sondern auch in einer Querrichtung 16 zu dem Schwingarm 11.

Fig. 6 zeigt eine schematische Darstellung einer vierten Ausführungsform des passiven Schwingungsdämpfers 3 in einer perspektivischen Ansicht. Der Schwingungsdämpfer 3 weist zwei Schwingmassen 12 und einen balkenförmigen Schwingarm 11 auf. Dieser Schwingungsdämpfer vereint auf sich somit die Vorteile der in Fig. 4 und Fig. 5 gezeigten Schwingungsdämpfer 3.

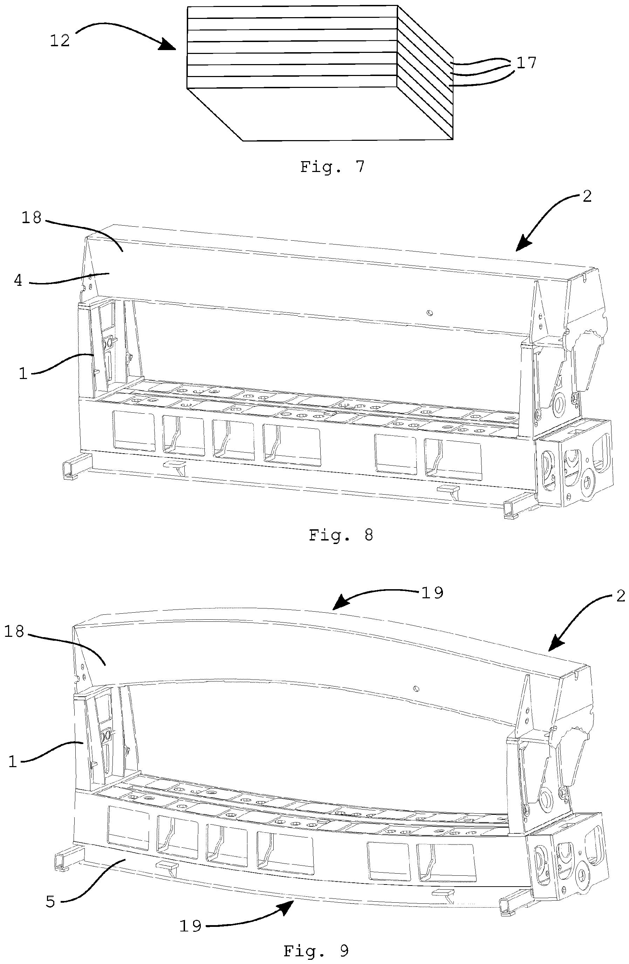

Fig. 7 zeigt eine schematische Darstellung einer Schwingmasse 12, die mehrere Metallplatten 17 aufweist, in einer Seitenansicht. Die Metallplatten 17 bestehen aus Gusseisen und sind miteinander verschraubt. Bei einer Verformung der Schwingmasse 12 entsteht eine erhebliche Fugendämpfung zwischen den Metallplatten 17, sodass Schwingungen effektiv gedämpft werden können, selbst wenn Bauhöhe und ein Gesamtgewicht der Schwingmasse 12 vergleichsweise gering sind.

Fig. 8 zeigt eine schematische Darstellung einer tragenden Struktur 1 einer Kettenwirkmaschine 2 mit einer Traverse 18 in einer perspektivischen Ansicht. Eine solche Traverse 18 kann zur Aufhängung von Maschinenelementen, zur Stabilisierung einer tragenden Struktur einer Kettenwirkmaschine und zu sonstigen Zwecken dienen. Die Traverse 18 bildet einen Tragkörper 4 einer tragenden Struktur 1 der Kettenwirkmaschine 2. Innerhalb der Traverse 18 ist ein nicht dargestellter passiver Schwingungsdämpfer erfindungsgemäß angeordnet, um unerwünschte Schwingungen zu dämpfen.

Fig. 9 zeigt eine schematische Darstellung der tragenden Struktur 1 der Kettenwirkmaschine 2 gemäß Fig. 8 unter Einwirkung von Verformungskräften beim Betrieb der Kettenwirkmaschine 2. Die Verformungswirkung ist hierbei übersteigert dargestellt. Gut erkennbar ist, dass ein Schwingungsbauch 19 sowohl an der Traverse 18 als auch an einem Maschinenbett 5 der Kettenwirkmaschine 2 entsteht. Der Verformung wird durch den passiven Schwingungsdämpfer entgegengewirkt.

### B E Z U G S Z E I C H E N L I S T E

1. Tragende Struktur
2. Kettenwirkmaschine
3. Schwingungsdämpfer
4. Tragkörper
5. Maschinenbett
6. Wandung
7. Bodenwand
8. Außenseite
9. Zusatzschwingungsdämpfer
10. Befestigungselement
11. Schwingarm
12. Schwingmasse
13. Oberer Schwingmassenanteil
14. Unterer Schwingmassenanteil
15. Normalenrichtung
16. Querrichtung
17. Metallplatte
18. Traverse
19. Schwingungsbauch

## Patentansprüche

1. Kettenwirkmaschine (2) mit einer Barrenanordnung umfassend mehrere Barren, die Wirkwerkzeuge aufweisen, mit einer tragenden Struktur, die mindestens einen Tragkörper (4) aufweist, der im Wesentlichen parallel zu den Barren ausgerichtet ist, und mit einem Schwingungsdämpfer (3), wobei es sich bei dem Schwingungsdämpfer (3) um einen passiven Schwingungsdämpfer (3) handelt, der mit einer Wandung (6) des Tragkörpers (4) in einer Wirkverbindung steht, wobei der Schwingungsdämpfer (3) an der Wandung (6) des Tragkörpers (4) innerhalb eines mittleren Drittels des Tragkörpers (4) entlang einer Längsrichtung des Tragkörpers (4) befestigt ist, **dadurch gekennzeichnet, dass** der Schwingungsdämpfer (3) ausschließlich mit dem mittleren Drittel der Wandung (6) in einer Wirkverbindung steht.

2. Kettenwirkmaschine (2) nach Anspruch 1, **dadurch gekennzeichnet, dass** an dem Tragkörper (4) mindestens ein passiver Zusatzschwingungsdämpfer (9) befestigt ist.

3. Kettenwirkmaschine (2) nach Anspruch 2, **dadurch gekennzeichnet, dass** der Zusatzschwingungsdämpfer (9) an der Wandung (6) des Tragkörpers (4) außerhalb eines mittleren Drittels des Tragkörpers (4) entlang der Längsrichtung des Tragkörpers (4) befestigt ist.

4. Kettenwirkmaschine (2) nach einem der vorhergehenden Ansprüche, **dadurch gekennzeichnet, dass** es sich bei dem Tragkörper (4) um ein Maschinenbett (5) handelt, in dem ein Getriebe zum Antrieb der Barren angeordnet ist.

5. Kettenwirkmaschine (2) nach Anspruch 4, **dadurch gekennzeichnet, dass** es sich bei der Wandung (6) um eine Bodenwand (7) des Maschinenbetts (5) handelt.

6. Kettenwirkmaschine (2) nach Anspruch 5, **dadurch gekennzeichnet, dass** der Schwingungsdämpfer (3) an einer Außenseite (8) der Bodenwand (7) befestigt ist, wobei das Maschinenbett (5) durch Fußelemente gestützt ist, sodass die Bodenwand (7) von einem Untergrund, auf dem das Maschinenbett (5) steht, beabstandet ist.

7. Kettenwirkmaschine (2) nach einem der vorhergehenden Ansprüche, **dadurch gekennzeichnet, dass** es sich bei dem Tragkörper (4) um eine Traverse (18) handelt, die oberhalb der Barrenanordnung verläuft.

8. Kettenwirkmaschine (2) nach Anspruch 7, **dadurch gekennzeichnet, dass** es sich bei der Wandung (6) um eine Bodenwand (7) oder um eine Deckenwand der Traverse (18) handelt.

9. Kettenwirkmaschine (2) nach einem der vorhergehenden Ansprüche, **dadurch gekennzeichnet, dass** der Schwingungsdämpfer (3) ein Befestigungselement (10), einen Schwingarm (11) und eine Schwingmasse (12) aufweist, wobei das Befestigungselement (10) an der Wandung (6) befestigt ist, wobei sich der Schwingarm (11) ausgehend von dem Befestigungselement (10) im Wesentlichen parallel zu der Wandung (6) erstreckt und von dieser beabstandet ist, und wobei die Schwingmasse (12) von dem Befestigungselement (10) beabstandet an dem Schwingarm (11) angeordnet ist.

10. Kettenwirkmaschine (2) nach Anspruch 9, **dadurch gekennzeichnet, dass** der Schwingarm (11) im Wesentlichen parallel zu der Längsrichtung des Tragkörpers (4) ausgerichtet ist.

11. Kettenwirkmaschine (2) nach Anspruch 9 oder Anspruch 10, **dadurch gekennzeichnet, dass** die Schwingmasse (12) an einer Schwingarmoberfläche des Schwingarms (11) befestigt ist, die der Wandung (6) zugewandt ist, wobei die Schwingmasse (12) zumindest teilweise zwischen der Schwingarmoberfläche und der Wandung (6) des Tragkörpers (4) angeordnet ist.

12. Kettenwirkmaschine (2) nach einem der Ansprüche 9 bis 11, **dadurch gekennzeichnet, dass** sich der Schwingarm (11) ausgehend von dem Befestigungselement (10) in zwei entgegengesetzte Richtungen erstreckt, sodass er einen ersten Schwingabschnitt und einen zweiten Schwingabschnitt bildet, wobei an dem ersten Schwingabschnitt und an dem zweiten Schwingabschnitt jeweils eine Schwingmasse (12) angeordnet ist, und wobei die Schwingmassen (12) von dem Befestigungselement (10) beabstandet sind.

13. Kettenwirkmaschine (2) nach Anspruch 12, **dadurch gekennzeichnet, dass** die Schwingmassen (12) und/oder die Schwingarme (11) so ausgelegt sind, dass der Schwingungsdämpfer (3) mehrere unterschiedliche Eigenfrequenzen zur Dämpfung von Schwingungen aufweist.

14. Kettenwirkmaschine (2) nach einem der Ansprüche 9 bis 13, **dadurch gekennzeichnet, dass** die Schwingmasse (12) durch mindestens zwei aneinander anliegende Metallplatten (17) gebildet wird.

## Claims

1. Warp knitting machine (2) having a bar arrangement comprising a plurality of bars which have knitting tools, having a supporting structure which has at least one supporting body (4) which is aligned substantially parallel to the bars, and having a vibration damping device (3), wherein the vibration damping device (3) is a passive vibration damping device (3) which is in an operational connection with a wall (6) of the supporting body (4), wherein the vibration damping device (3) is fastened to the wall (6) of the supporting body (4) within a central third of the supporting body (4) along a longitudinal direction of the supporting body (4), **characterised in that** the vibration damping device (3) is in an operational connection only with the central third of the wall (6).

2. Warp knitting machine (2) according to claim 1, **characterised in that** at least one passive additional vibration damping device (9) is fastened to the supporting body (4).

3. Warp knitting machine (2) according to claim 2, **characterised in that** the additional vibration damping device (9) is fastened to the wall (6) of the supporting body (4) externally to a central third of the supporting body (4) along the longitudinal direction of the supporting body (4).

4. Warp knitting machine (2) according to any of the preceding claims, **characterised in that** the supporting body (4) is a machine bed (5) in which is arranged a gear mechanism for driving the bars.

5. Warp knitting machine (2) according to claim 4, **characterised in that** the wall (6) is a base wall (7) of the machine bed (5).

6. Warp knitting machine (2) according to claim 5, **characterised in that** the vibration damping device (3) is fastened to an outer side (8) of the base wall (7), wherein the machine bed (5) is supported by foot elements, such that the base wall (7) is spaced from a substrate upon which the machine bed (5) stands.

7. Warp knitting machine (2) according to any of the preceding claims, **characterised in that** the supporting body (4) is a crossbeam (18) which extends above the bar arrangement.

8. Warp knitting machine (2) according to claim 7, **characterised in that** the wall (6) is a base wall (7) or a ceiling wall of the crossbeam (18).

9. Warp knitting machine (2) according to any of the preceding claims, **characterised in that** the vibration damping device (3) has a fastening element (10), a swinging arm (11) and an oscillatory mass (12), wherein the fastening element (10) is fastened to the wall (6), wherein the swinging arm (11) starting from the fastening element (10) extends substantially parallel to the wall (6) and is spaced therefrom, and wherein the oscillatory mass (12) is arranged on the swinging arm (11) so as to be spaced from the fastening element (10).

10. Warp knitting machine (2) according to claim 9, **characterised in that** the swinging arm (11) is aligned substantially parallel to the longitudinal direction of the supporting body (4).

11. Warp knitting machine (2) according to claim 9 or claim 10, **characterised in that** the oscillatory mass (12) is fastened to a swinging arm surface, which faces the wall (6), of the swinging arm (11), wherein the oscillatory mass (12) is arranged at least partially between the swinging arm surface and the wall (6) of the supporting body (4).

12. Warp knitting machine (2) according to any of claims 9 to 11, **characterised in that** the swinging arm (11), starting from the fastening element (10), extends in two opposite directions, such that it forms a first swinging portion and a second swinging portion, wherein on the first swinging portion and on the second swinging portion is arranged respectively one oscillatory mass (12), and wherein the oscillatory masses (12) are spaced from the fastening element (10).

13. Warp knitting machine (2) according to claim 12, **characterised in that** the oscillatory masses (12) and/or the swinging arms (11) are designed such that the vibration damping device (3) has a plurality of different natural frequencies for damping oscillations.

14. Warp knitting machine (2) according to any of claims 9 to 13, **characterised in that** the oscillatory mass (12) is formed by at least two metal plates (17) laid one on another.

## Revendications

1. Métier à tricoter chaîne (2) avec un agencement de barres comprenant plusieurs barres, qui présentent des outils de tricotage, avec une structure de support, qui présente au moins un corps de support (4), qui est orienté de manière sensiblement parallèle par rapport aux barres, et avec un dispositif amortisseur d'oscillations (3), dans lequel le dispositif amortisseur d'oscillations (3) est un dispositif amortisseur d'oscillations (3) passif, qui se trouve en liaison active avec une paroi (6) du corps de support (4), dans lequel le dispositif amortisseur d'oscillations (3) est fixé sur la paroi (6) du corps de support (4) à l'intérieur d'un tiers central du corps de support (4) le long d'un sens longitudinal du corps de support (4), **caractérisé en ce que** le dispositif amortisseur d'oscillations (3) se trouve en liaison active exclusivement avec le tiers central de la paroi (6).

2. Métier à tricoter chaîne (2) selon la revendication 1, **caractérisé en ce qu'**au moins un dispositif amortisseur d'oscillations supplémentaire (9) passif est fixé sur le corps de support (4).

3. Métier à tricoter chaîne (2) selon la revendication 2, **caractérisé en ce que** le dispositif amortisseur d'oscillations supplémentaire (9) est fixé sur la paroi (6) du corps de support (4) à l'extérieur d'un tiers central du corps de support (4) le long du sens longitudinal du corps de support (4).

4. Métier à tricoter chaîne (2) selon l'une quelconque des revendications précédentes, **caractérisé en ce que** le corps de support (4) est un banc de métier (5), dans lequel est agencée une transmission pour entraîner les barres.

5. Métier à tricoter chaîne (2) selon la revendication 4, **caractérisé en ce que** la paroi (6) est une paroi de fond (7) du banc de métier (5).

6. Métier à tricoter chaîne (2) selon la revendication 5, **caractérisé en ce que** le dispositif amortisseur d'oscillations (3) est fixé sur un côté extérieur (8) de la paroi de fond (7), dans lequel le banc de métier (5) est soutenu par des éléments formant pieds de sorte que la paroi de fond (7) est tenue à distance d'un sol, sur lequel se trouve le banc de métier (5).

7. Métier à tricoter chaîne (2) selon l'une quelconque des revendications précédentes, **caractérisé en ce que** le corps de support (4) est une traverse (18) qui s'étale au-dessus de l'agencement de barres.

8. Métier à tricoter chaîne (2) selon la revendication 7, **caractérisé en ce que** la paroi (6) est une paroi de fond (7) ou une paroi de couvercle de la traverse (18).

9. Métier à tricoter chaîne (2) selon l'une quelconque des revendications précédentes, **caractérisé en ce que** le dispositif amortisseur d'oscillations (3) présente un élément de fixation (10), un bras oscillant (11) et une masse oscillante (12), dans lequel l'élément de fixation (10) est fixé sur la paroi (6), dans lequel le bras oscillant (11) s'étend en partant de l'élément de fixation (10) de manière sensiblement parallèle par rapport à la paroi (6) et est tenu à distance de celle-ci, et dans lequel la masse oscillante (12) est agencée sur le bras oscillant (11) à distance de l'élément de fixation (10).

10. Métier à tricoter chaîne (2) selon la revendication 9, **caractérisé en ce que** le bras oscillant (11) est orienté de manière sensiblement parallèle par rapport au sens longitudinal du corps de support (4).

11. Métier à tricoter chaîne (2) selon la revendication 9 ou la revendication 10, **caractérisé en ce que** la masse oscillante (12) est fixée sur une surface de bras oscillant du bras oscillant (11), qui est tournée vers la paroi (6), dans lequel la masse oscillante (12) est agencée au moins en partie entre la surface de bras oscillant et la paroi (6) du corps de support (4).

12. Métier à tricoter chaîne (2) selon l'une quelconque des revendications 9 à 11, **caractérisé en ce que** le bras oscillant (11) s'étend en partant de l'élément de fixation (10) dans deux sens opposés de sorte qu'il forme une première section oscillante et une seconde section oscillante, dans lequel une masse oscillante (12) est agencée respectivement sur la première section oscillante et sur la seconde section oscillante, et dans lequel les masses oscillantes (12) sont tenues à distance de l'élément de fixation (10).

13. Métier à tricoter chaîne (2) selon la revendication 12, **caractérisé en ce que** les masses oscillantes (12) et/ou les bras oscillants (11) sont configurés de sorte que le dispositif amortisseur d'oscillations (3) présente plusieurs fréquences propres différentes pour amortir des oscillations.

14. Métier à tricoter chaîne (2) selon l'une quelconque des revendications 9 à 13, **caractérisé en ce que** la masse oscillante (12) est formée par au moins deux plaques en métal (17) reposant l'une sur l'autre.
